# EUROPÄISCHE PATENTSCHRIFT

(11) **EP 4 290 403 B1**
(45) Veröffentlichungstag und Bekanntmachung des Hinweises auf die Patenterteilung: **31.07.2024**
(21) Anmeldenummer: 22177569.5
(22) Anmeldetag: 07.06.2022
(51) Int. Cl.: G06K 7/14

(54) **LESEN EINES EINDIMENSIONALEN OPTISCHEN CODES**
READING OF A ONE-DIMENSIONAL OPTICAL CODE
LECTURE D'UN CODE OPTIQUE UNIDIMENSIONNEL

(43) Veröffentlichungstag der Anmeldung: 13.12.2023
(73) Patentinhaber: SICK AG, 79183 Waldkirch (DE)
(72) Erfinder: Hampf, Marcel, 77955 Ettenheim (DE); Müller, Dr. Romain, 79252 Stegen (DE); Falk, Thorsten, 79292 Pfaffenweiler (DE); Zimmer, Julian, 79110 Freiburg (DE)

(56) Entgegenhaltungen:
- EP-A1- 3 428 834
- EP-A1- 3 812 953
- EP-B1- 2 415 015

## Beschreibung

Die Erfindung betrifft ein Verfahren zum Lesen eines eindimensionalen optischen Codes nach dem Oberbegriff von Anspruch 1 sowie eine entsprechende Codelesevorrichtung nach Anspruch 15.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation.

In einer wichtigen Anwendungsgruppe werden die codetragenden Objekte an dem Codeleser vorbeigefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Obwohl es zahlreiche Typen zweidimensionaler optischer Codes gibt, spielen die eindimensionalen Barcodes oder Strichcodes weiterhin eine bedeutende Rolle. Barcodes bestehen aus schwarzen Balken und weißen Lücken. Die für die Codelesung gescannten oder aufgenommenen Bilddaten hingegen weisen Graustufen auf, beispielsweise Grauwerte von 0 bis 255 bei einer Farbtiefe von acht Bit. Die Decoder können, mit Ausnahme von wenigen Verfahren wie einem Template Matching, mit den Grauwerten nicht umgehen. Deshalb geht dem Decoder üblicherweise eine Binarisierung voraus, mit der die Grauwerte in Schwarzweißwerte beziehungsweise eine Farbtiefe von nur einem Bit konvertiert werden.

Eine Binarisierung bedeutet eine starke Reduktion der Information. Die entscheidende Information über die Breiten von Balken und Lücken sollte dabei keinesfalls verlorengehen. Ein einfaches Schwellwertverfahren genügt nur unter idealisierten Bedingungen. In der Praxis ist das nicht gegeben, es gibt verschiedene störende Effekte wie unzureichenden Fokus, optische Verzerrungen, Verschmutzungen, Rauschen, Bewegungsunschärfe, Reflexionen, Codebeschädigungen, unzureichende Belichtungen und vieles mehr.

Deshalb werden deutlich komplexere Binarisierungsalgorithmen benötigt, um eine erfolgreiche Decodierung zu ermöglichen. Dabei sind zunächst kleinere Optimierungen wie intelligente oder lokale Schwellwertwahl und Vorfilterungen zu nennen. Bei einem differentiellen Verfahren wird der ursprüngliche Grauwertverlauf abgeleitet, um Flanken und Extrema zu lokalisieren. Auch hierzu gibt es zahlreiche Optimierungen. Um die Vorteile verschiedener Binarisierungsalgorithmen zu kombinieren, werden diese oft parallel ausgeführt und die Ergebnisse getrennt decodiert.

Mit diesen herkömmlichen Implementierungen einer Binarisierung werden in vielen realen Codelesesituationen gute Ergebnisse erzielt. Trotzdem verbleiben noch zu viele Codeerfassungen, bei denen die Qualität der Binarisierung unzureichend ist. Das sind beispielsweise Fälle mit starker Unschärfe, geringem Signal-Rausch-Verhältnis, Abtasteffekten, geringem Kontrast, geringer Codeauflösung und weitere. Besonders ungünstig sind Kombinationen solcher Effekte. Gerade in diesem Zusammenspiel ergibt sich eine Komplexität der Störungen, die schon eine Beschreibung extrem schwierig und zeitintensiv machen, erst recht die Entwicklung passender Algorithmen, um den jeweiligen Problemfällen einzeln und zielgerichtet zu begegnen.

Die EP 2 003 599 A1 offenbart einen optoelektronischen Sensor zum Erfassen von Codes, der eingelesene Farb- oder Grauwertbilddaten noch während des Empfangs und/oder in Echtzeit binarisiert. Auf einen besonderen, konkreten Binarisierungsalgorithmus geht das Dokument aber nicht ein.

Die EP 2 555 160 B1 findet in einer Vorverarbeitung auf einem FPGA interessierende Bereiche oder Codekandidaten anhand eines Kontrastmaßes. Das kann mit einer Binarisierung verbunden werden, die aber nicht näher erläutert wird.

Die EP 3 428 834 B1 nutzt einen klassischen Decoder, der mit Verfahren ohne maschinelles Lernen arbeitet, um einen für maschinelles Lernen ausgebildeten Klassifikator oder spezieller ein neuronales Netz zu trainieren. Der klassische Decoder ist bevorzugt dafür ausgebildet, die Bilddaten zu binarisieren, ohne jedoch auszuführen, wie diese Binarisierung konkret abläuft.

In der EP 3 916 633 A1 wird eine Kamera und ein Verfahren zum Verarbeiten von Bilddaten beschrieben, bei dem eine Segmentierung mittels neuronalen Netzes in einem Streaming-Verfahren erfolgt, d.h. Bilddaten schon verarbeitet werden, noch während weitere Bilddaten eingelesen werden. Zumindest die ersten Schichten des neuronalen Netzes können auf einem FPGA implementiert sein. In einer Ausführungsform gibt es einen zusätzlichen Verarbeitungspfad, der parallel zu dem neuronalen Netz auf einer separaten Kopie des hochaufgelösten Ausgangsbildes mit klassischen oder lernenden Verfahren Vorverarbeitungsschritte wie die Erzeugung eines Binärbildes durchführt. Erneut wird auf die Binarisierung nicht näher eingegangen.

Die US 8 576 446 B2 beschreibt ein Verfahren zur Bildbewertung. Dabei wird ein eingescanntes Grauwertbild einem Deblurring mittels Entfaltung (Deconvolution) und einer Binarisierung mit adaptiven Schwellen unterzogen. Die US 2020/0394376 A1 führt eine Auflösungserhöhung mittels neuronalem Netz und anschließend eine Binarisierung und Decodierung durch. Das ist jeweils nicht auf Barcodes, also eindimensionale Codes zugeschnitten, und in den geschilderten Problemsituationen kann es weiterhin zu einer unzureichenden Qualität der Binarisierung kommen.

In einem Codeleser nach der EP 3 812 953 A1 werden Zusatzalgorithmen in Abhängigkeit von einer gemessenen Distanz zum Code in das Decodierverfahren einbezogen. Einer dieser Zusatzalgorithmen kann ein Deblurring mit Richardson-Lucy-Deconvolution sein. Das wird aber nicht mit einer Binarisierung verbunden.

Es ist daher Aufgabe der Erfindung, die Binarisierung für das Lesen von Barcodes zu verbessern.

Diese Aufgabe wird durch ein Verfahren zum Lesen eines eindimensionalen optischen Codes nach dem Oberbegriff von Anspruch 1 sowie eine entsprechende Codelesevorrichtung nach Anspruch 15 gelöst. In dieser Beschreibung wird der Begriff Barcode synonym zu einem eindimensionalen optischen Code verwendet, abweichend von Teilen der Literatur, die auch zweidimensionale Codes bisweilen als Barcodes bezeichnet. Die Schritte zum Lesen eines Barcodes laufen automatisch ab, es handelt sich um ein computerimplementiertes Verfahren.

Es werden Bilddaten mit dem Code aufgenommen. Dafür kann eine Matrixkamera eingesetzt sein. Ebenso denkbar ist das wiederholte Aufnehmen mit einer Zeilenkamera insbesondere mit Vorschub zwischen Code und Zeilenkamera und Zusammensetzen der nacheinander aufgenommenen Bildzeilen zu einem flächigen Bild. Das Intensitätsprofil eines Codescanners kann ebenfalls als Bildzeile aufgefasst werden. Durch die flächige Aufnahme oder wiederholte Zeilenerfassung wird der Code mehrfach erfasst, und dementsprechend lassen sich mehrere Grauwertverläufe durch den Code gewinnen. Jeder Grauwertverlauf repräsentiert den Code, in diesem Sinne sind die mehreren Grauwertverläufe redundant. Durch die Unterschiede zwischen den Grauwertverläufen ist das keine vollständige Redundanz, und deshalb kann die Überbestimmung der mehreren Grauwertverläufe dafür genutzt werden, robustere Leseergebnisse zu erzielen. Ein Grauwertverlauf wird in Anlehnung an Codescanner auch als ein Scan bezeichnet, in etwas erweitertem Verständnis handelt es sich um einen Intensitätsverlauf oder die Bilddaten längs einer Linie durch den Code beispielsweise in 256 Graustufen bei acht Bit Farb- oder Grauwerttiefe.

Aus den Grauwertverläufen wird mittels Binarisierung ein Schwarzweißverlauf mit nun nur noch einem Bit Farb- oder Grauwerttiefe gebildet und daraus der Codeinhalt des Codes gelesen. Die Binarisierung kann auf jede an sich bekannte Weise einschließlich intelligenter oder lokaler Schwellen beziehungsweise einem vorangehenden Differenzieren oder dem Einsatz von Verfahren des maschinellen Lernens erfolgen, insbesondere neuronaler Netze. Auch für das Codelesen können jegliche an sich bekannten klassischen Decoder oder Verfahren des maschinellen Lernens eingesetzt werden.

Die Erfindung geht von dem Grundgedanken aus, zur Unterstützung und Vorbereitung der Binarisierung aus den mehreren Grauwertverläufen unter Ausnutzung von deren Redundanz einen aufgeschärften Grauwertverlauf zu erzeugen. Der aufgeschärfte Grauwertverlauf hat eine gegenüber den ursprünglichen Bilddaten erhöhte Auflösung (Upsampling, Superresolution). Zudem sind darin die Kanten und Extrema geschärft (Deblurring, Amplitudenspreizung), sie sind ausgeprägter als in den ursprünglichen Bilddaten. Verwaschene Kanten werden schärfer und steiler, die Grauwerte zu Balken werden dunkler und die Grauwerte zu Lücken heller. Die anschließende Binarisierung ist damit deutlich erleichtert.

In einer bevorzugten Ausführungsform sind Auflösungserhöhung und Schärfung getrennte Schritte. Es ist aber auch denkbar, dass nicht explizit als Zwischenergebnis ein Grauwertverlauf allein mit höherer Auflösung und noch ohne erhöhte Schärfe gebildet wird. Insbesondere in Implementierungen mit einem neuronalen Netz können Zwischenergebnisse in Merkmalskarten der versteckten Schichten verborgen bleiben und ausgangsseitig direkt der fertige, aufgeschärfte Grauwertverlauf mit beiden Verbesserungen resultieren. Allgemein sind verschiedene Schritte des erfindungsgemäßen Verfahrens vorgesehen, nämlich Auflösungserhöhung, Schärfung, Binarisieren und Codelesen, die jeweils klassisch oder mit einem Verfahren des maschinellen Lernens durchgeführt werden können. Hier sind verschiedene Mischformen von klassischen Schritten und solchen des maschinellen Lernens möglich, und insbesondere im Falle der Umsetzung von Schritten mit neuronalen Netzen können einzelne neuronale Netze je Schritt oder für mehrere aufeinanderfolgende Schritte implementiert werden.

Die Erfindung hat den Vorteil, dass besonders viele Barcodes erfolgreich decodiert werden und somit die Leserate steigt. Es können auch noch verwaschene, gering aufgelöste und sonstige in geringer Qualität erfasste Grauwertverläufe präzise binarisiert und in Folge die Codes gelesen werden. Das gilt insbesondere für die kritischen Fälle kleiner Modulgrößen, d.h. Pixel je kleinstem Balken oder kleinster Lücke, insbesondere Modulgrößen im Bereich von eins oder noch weniger. Das erfindungsgemäße Verfahren kann im Parallelbetrieb mit anderen Codeleseverfahren oder erst dann eingesetzt werden, wenn die anderen Codeleseverfahren scheitern.

Bevorzugt werden in einer Vorverarbeitung die Bilddaten segmentiert, um einen Bildbereich mit dem Code zu finden. Dadurch wird das Lesen von Barcodes auf interessierende Bereiche beschränkt, in denen jedenfalls mit hoher Wahrscheinlichkeit tatsächlich ein Barcode zu finden ist. Die Segmentierung wird vorzugsweise in einem anderen Baustein durchgeführt als das anschließende Codelesen, insbesondere mit Segmentierung in einem FPGA (Field Programmable Gate Array) und Codelesen in einer CPU (Mikroprozessor). Hier wird ergänzend auf die einleitend genannte EP 2 555 160 B1 verwiesen. Das FPGA kann zumindest Teile des erfindungsgemäßen Verfahrens abarbeiten, insbesondere durch ein neuronales Netz mit frühen Schichten auf dem FPGA wie in der einleitend genannten EP 3 916 633 A1.

Bevorzugt wird in einer Vorverarbeitung eine Orientierung des Codes in den Bilddaten bestimmt, insbesondere im Rahmen der Segmentierung. Die ideale Leserichtung verläuft quer zu den Balken des Barcodes, während umgekehrt mit einer Leserichtung längs zu den Balken das Lesen nicht möglich ist. Ist die Orientierung des Codes bekannt, so können geeignete Grauwertverläufe gewonnen werden. Vorzugsweise findet nur eine Auswahl zwischen horizontal und vertikal statt, um direkt Zeilen oder Spalten der Bilddaten verwenden zu können. Zwar wird die ideale Leserrichtung senkrecht zu den Balken in aller Regel schräg verlaufen, ein schräger Grauwertverlauf weist jedoch aufgrund des diskreten Rasters der Bilddaten Grauwertsprünge auf. Zwischen diesen beiden Kriterien ist abzuwägen. Um zwischen horizontal und vertikal zu unterscheiden, kann eine Art Testkreuz mit zwei zueinander senkrechten Linien gebildet werden. Eine der beiden Linien quert dann eine höhere Zahl an Balken und Lücken beziehungsweise Hell-Dunkel-Übergängen, und danach wird die Orientierung des Codes bestimmt.

Zur Vorbereitung der Binarisierung wird bevorzugt zunächst aus den mehreren Grauwertverläufen ein höher aufgelöster Grauwertverlauf erzeugt. Wie oben schon angesprochen, werden in dieser Ausführungsform zwei separate Schritte der Auflösungserhöhung und Schärfung durchgeführt. Die redundanten mehreren Grauwertverläufe werden genutzt, um einen höher aufgelösten Grauwertverlauf zu erzeugen. Entsprechende Verfahren zur Auflösungserhöhung (Superresolution) sind an sich bekannt, es gibt dafür klassische Algorithmen wie Verfahren des maschinellen Lernens, insbesondere mit neuronalen Netzen.

Bevorzugt wird aus dem höher aufgelösten Grauwertverlauf durch ein Entfaltungsverfahren der aufgeschärfte Grauwertverlauf erzeugt. Eine Entfaltung (Deconvolution) ist ein klassisches Verfahren, d.h. kein Verfahren des maschinellen Lernens und insbesondere kein neuronales Netz. Besonders geeignet im Falle von Barcodes ist eine Richardson-Lucy-Deconvolution.

Alternativ wird aus dem höher aufgelösten Grauwertverlauf durch ein Verfahren des maschinellen Lernens der aufgeschärfte Grauwertverlauf erzeugt. Klassische Ansätze wie die Richardson-Lucy-Deconvolution kommen mit relativ geringen Rechenressourcen zurecht. Sie haben aber den Nachteil, dass sie für gute Ergebnisse von Hand parametriert werden müssen. Das ist bei einem Verfahren des maschinellen Lernens, das datengetrieben ist, nicht erforderlich, und zudem werden damit oft noch bessere Ergebnisse erzielt.

Das Verfahren des maschinellen Lernens weist bevorzugt ein neuronales Netz auf, insbesondere ein Faltungsnetz mit einem Filterkern einer Breite entsprechend einer Modulgröße des Codes in dem höher aufgelösten Grauwertverlauf. Für neuronale Netze, insbesondere tiefe neuronale Netze mit versteckten Schichten ("Deep Learning"), steht ein riesiger Fundus an nutzbaren Softwarepaketen und bei Bedarf auch dedizierter Hardware zur Verfügung. Im Rahmen der Bildverarbeitung sind insbesondere Faltungsnetze (CNN, Convolutional Neural Networks) geeignet. Die angestrebte Binarisierung hängt stark von lokalen Nachbarschaftsbeziehungen ab, wobei Durchmischungen über ein Modul hinweg eher stören als helfen. Daher ist ein Faltungsnetz mit einem Filterkern in der Größenordnung der Modulgröße besonders gut an die hier angestrebte Anwendung adaptiert. Die Erfindung zielt in erster Linie auf niedrig aufgelöste Codeaufnahmen mit Modulgrößen im Bereich von einem Pixel oder darunter ab. Nach der Auflösungserhöhung wird daraus eine Modulbreite von einigen Pixel, beispielsweise fünf Pixel, und demnach wird bevorzugt ein Filterkern mit einer Breite entsprechend der Modulbreite, im genannten Beispiel von fünf Pixel gewählt. Ein etwas schmalerer oder breiterer Filterkern ist auch möglich, es sollte aber vorzugsweise kein Vielfaches der Modulbreite werden. Die Anpassung der Filterkerne an die Modulgröße ist aber nicht zwingend, das neuronale Netz kann sich durch Lernen auch an weniger günstige Anfangsbedingungen anpassen. Die Breite des Filterkerns bezieht sich auf die erste Schicht oder frühe Schichten, in späteren Schichten verbreitet sich der der lokale Kontext durch die wiederholten Faltungen ohnehin auf größere Nachbarschaften weiter.

Aus den mehreren Grauwertverläufen wird vorzugsweise durch ein Verfahren des maschinellen Lernens, insbesondere ein Faltungsnetz, ein höher aufgelöster Grauwertverlauf oder der aufgeschärfte Grauwertverlauf erzeugt. Die mehreren Grauwertverläufe werden hierfür vorzugsweise übereinandergelegt und so als 2D-Bild eingangsseitig eingespeist. In der ersten Alternative leistet dann das Verfahren des maschinellen Lernens die Auflösungserhöhung in einem separaten Zwischenschritt, wie oben schon als eine Möglichkeit angesprochen. In der zweiten Alternative werden die beiden Schritte Auflösungserhöhung und Schärfung in einem Verfahren des maschinellen Lernens zusammengefasst. Es ist dann offen, ob das Verfahren des maschinellen Lernens explizit als Zwischenschritt zunächst eine Auflösungserhöhung vornimmt, in der Regel wird das eher nicht der Fall sein, und jedenfalls handelt es sich dann um ein rein internes Zwischenergebnis beispielsweise in Form von Merkmalskarten versteckter Schichten. Die Auflösungserhöhung ist aber in irgendeiner Form intern repräsentiert, denn der resultierende aufgeschärfte Grauwertverlauf ist sowohl in seiner Auflösung als auch seiner Schärfe verbessert.

Das Verfahren des maschinellen Lernens wird bevorzugt mittels überwachten Lernens anhand von Trainingsdaten trainiert, die einen Grauwertverlauf und einen Schwarzweißverlauf einander zuordnen, wobei die Trainingsdaten aus einem vorgegebenen Codeinhalt oder einem erfolgreich gelesenen Code gewonnen sind. Das überwachte Lernen (supervised learning) ermöglicht, aus einem Trainingsdatensatz mit Beispielen einer vorgegebenen richtigen Bewertung auf später im Betrieb präsentierte Ausgangsbilder zu verallgemeinern. Entsprechende Architekturen von neuronalen Netzen und Algorithmen für Training wie Betrieb (Inferenz) sind für sich bekannt, so dass auf gut funktionierende Lösungen zurückgegriffen oder darauf aufgesetzt werden kann. Eine typische Schwierigkeit hierbei ist das Erzeugen von Trainingsdatensätzen. In dieser Ausführungsform wird das auf zwei mögliche Arten gelöst, die einzeln oder kombiniert zum Einsatz kommen. Zum einen kann ein Codeinhalt vorgegeben, daraus ein idealer Schwarzweißverlauf konstruiert und dieser auf verschiedene Weisen zu einem Grauwertverlauf verfremdet werden. Zum anderen können echte Codebilder gelesen werden. Der Schwarzweißverlauf ist dann entweder die Binarisierung eines erfolgreichen Leseversuchs oder ein aus dem gelesenen Codeinhalt rekonstruierter Schwarzweißverlauf, und die Grauwertverläufe werden aus den Bilddaten der Codebilder entnommen. Die Grauwertverläufe sind die Trainingsbeispiele, der Schwarzweißverlauf das zugehörige gewünschte und zu trainierende Ergebnis (Label; Ground Truth).

Vorzugsweise wird die Auflösung der Trainingsdaten reduziert, um Trainingsdaten mit einer kleinen Modulgröße zu gewinnen. Erfolgreiche Leseversuche, aus denen Trainingsdaten gewonnen werden, sind typischerweise höher aufgelöst. Es ist ja gerade die Motivation der Erfindung, dass Problemfälle mit kleinen Modulgrößen sich häufig nicht lesen lassen. Um dennoch Trainingsbeispiele aus dem Feld nutzen zu können, werden in dieser Ausführungsform die ursprünglich hochaufgelösten Grauwertverläufe der echten Codebilder künstlich auf eine geringe Auflösung und damit kleine Modulgröße gebracht (Downsampling). Dazu wird ein Schwarzweißverlauf entweder neu in der geringen Auflösung konstruiert oder ebenfalls durch Verringerung der Auflösung angepasst.

Die Bilddaten werden bevorzugt in Relativbewegung eines Lichtempfangselements und eines codetragenden Objekts aufgenommen, insbesondere zeilenweise. Das Lichtempfangselement ist Teil einer Codelesevorrichtung, und die Relativbewegung entsteht vorzugsweise dadurch, dass codetragende Objekte beispielsweise auf einer Fördereinrichtung durch das Lesefeld der stationär montierten Codelesevorrichtung gefördert werden.

Die erfindungsgemäße Codelesevorrichtung zum Lesen eines eindimensionalen optischen Codes weist mindestens ein Lichtempfangselement zur Aufnahme von Bilddaten mit dem Code und eine Steuer- und Auswertungseinheit auf, die für die Durchführung einer der beschriebenen Ausführungsformen des erfindungsgemäßen Verfahrens ausgebildet ist. Die Codelesevorrichtung kann ein Barcodescanner sein, beispielsweise mit einer Photodiode als Lichtempfangselement, und die Intensitätsprofile der Scans sind dann die mehreren Grauwertverläufe, die direkt verarbeitet oder vorzugsweise zunächst zeilenweise zu den Bilddaten zusammengesetzt werden. Vorzugsweise handelt es sich bei der Codelesevorrichtung um einen kamerabasierten Codeleser mit einem Bildsensor als Lichtempfangselement. Der Bildsensor wiederum kann ein Zeilensensor zur Erfassung einer Codezeile oder eines flächigen Codebildes durch Zusammensetzen von Bildzeilen oder ein Matrixsensor sein, wobei auch Aufnahmen eines Matrixsensors zu einem größeren Ausgangsbild zusammengefügt sein können. Ein Verbund mehrerer Codeleser oder Kameraköpfe ist ebenfalls denkbar. Die Steuer- und Auswertungseinheit kann selbst Teil eines Barcodescanners oder eines kamerabasierten Codelesers oder als Steuerungsgerät daran angeschlossen sein.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung der beispielhaften Montage eines Codelesers über einem Förderband, auf dem Objekte mit zu lesenden Codes gefördert werden;
- Fig. 2: ein beispielhafter Grauwertverlauf durch einen Barcode;
- Fig. 3: ein beispielhafter Ausschnitt eines Grauwertverlaufs durch einen Barcode mit einem schwer zu erkennenden Hell-Dunkel-Übergang;
- Fig. 4: eine schematische Illustration der Erzeugung eines höher aufgelösten Grauwertverlaufs aus mehreren niedriger aufgelösten Grauwertverläufen;
- Fig. 5: ein Codebeispiel für die Architektur eines neuronalen Netzes zur Schärfung eines Grauwertverlaufs;
- Fig. 6: eine vergleichende Darstellung eines ursprünglichen Grauwertverlaufs, eines aufgeschärften Verlaufs und eines angestrebten idealen Schwarzweißverlaufs bei Aufschärfung mit einem neuronalen Netz;
- Fig. 7a: einen Ausschnitt aus einem Codebild mit ursprünglichen Grauwertverläufen;
- Fig. 7b: den Ausschnitt gemäß Figur 7a nach Anwendung eines neuronalen Netzes zur Schärfung;
- Fig. 7c: den Ausschnitt gemäß Figur 7b nach einer Binarisierung zu einem Schwarzweißverlauf;
- Fig. 7d: einen Vergleichsausschnitt mit idealem Schwarzweißverlauf (Ground Truth);
- Fig. 8: eine vergleichende Darstellung eines ursprünglichen Grauwertverlaufs, eines aufgeschärften Verlaufs und eines angestrebten idealen Schwarzweißverlaufs bei Aufschärfung mit Richardson-Lucy-Deconvolution;
- Fig. 9a: einen Ausschnitt aus einem Codebild mit ursprünglichen Grauwertverläufen;
- Fig. 9b: den Ausschnitt gemäß Figur 9a nach Anwendung einer Richardson-Lucy-Deconvolution zur Schärfung;
- Fig. 9c: den Ausschnitt gemäß Figur 9b nach einer Binarisierung zu einem Schwarzweißverlauf; und
- Fig. 9d: einen Vergleichsausschnitt mit idealem Schwarzweißverlauf (Ground Truth).

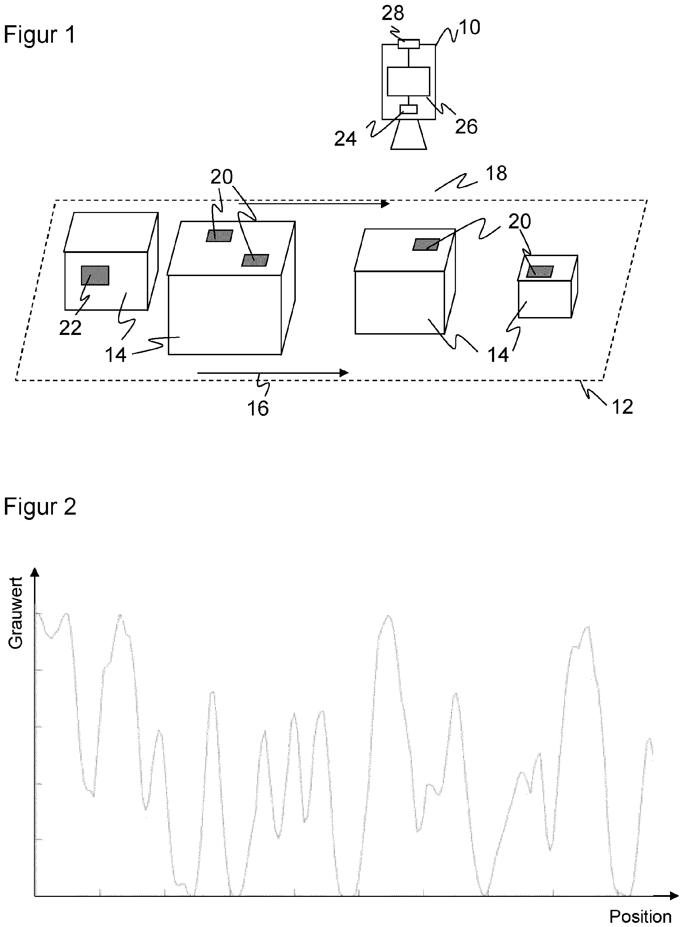

Figur 1 zeigt einen optoelektronischen Codeleser 10 in einer bevorzugten Anwendungssituation montiert über einem Förderband 12, welches Objekte 14, wie durch den Pfeil 16 angedeutet, durch den Erfassungsbereich 18 des Codelesers 10 fördert. Die Objekte 14 tragen an ihren Außenflächen Codebereiche 20, die von dem Codeleser 10 erfasst und ausgewertet werden. Diese Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber zunächst auf den Codeleser 10 selbst beziehungsweise das darin implementierte Verfahren zum Decodieren von Codes, so dass dieses Beispiel nicht einschränkend verstanden werden darf.

Der Codeleser 10 erfasst mit einem Bildsensor 24 Bilddaten der geförderten Objekte 14 und der Codebereiche 20, die von einer Steuer- und Auswertungseinheit 26 mittels Bildauswertung und Decodierverfahren weiterverarbeitet werden. Es kommt für die Erfindung nicht auf das konkrete Bildgebungsverfahren an, so dass der Codeleser 10 nach irgendeinem an sich bekannten Prinzip aufgebaut sein kann. Beispielsweise wird jeweils nur eine Zeile erfasst, sei es mittels zeilenförmigem Bildsensor oder einem Scanverfahren, wobei im letztgenannten Fall als Bildsensor 24 ein einfacher Lichtempfänger wie eine Photodiode ausreicht. Die Steuer- und Auswertungseinheit 26 wertet die erfassten Zeilen aus oder fügt die im Laufe der Förderbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist. Mehrere Codeleser 10 können erst gemeinsam die gesamte Breite des Förderbands 12 abdecken, wobei jeder Codeleser 10 nur einen Teilabschnitt aufnimmt und die Teilabschnitte durch Bildverarbeitung (Stitching) zusammengefügt werden. Auch ein nur fragmenthaftes Decodieren innerhalb einzelner Teilabschnitte mit anschließendem Zusammenfügen der Codefragmente ist denkbar.

Über eine Schnittstelle 28 gibt der Codeleser 10 Informationen aus, wie gelesene Codes oder Bilddaten. Es ist auch denkbar, dass die Steuer- und Auswertungseinheit 26 nicht in dem eigentlichen Codeleser 10, also der in Figur 1 gezeigten Kamera angeordnet ist, sondern als eigenes Steuerungsgerät an einen oder mehrere Codeleser 10 angeschlossen wird. Dann dient die Schnittstelle 28 auch als Verbindung zwischen interner und externer Steuerung und Auswertung. Die Steuer- und Auswertungsfunktionalität kann praktisch beliebig auf interne und externe Bausteine verteilt werden, wobei die externen Bausteine auch über Netzwerk oder Cloud angeschlossen sein können. Das alles wird hier nicht weiter unterschieden und die Steuer- und Auswertungseinheit 26 unabhängig von der konkreten Implementierung als Teil des Codelesers 10 aufgefasst. Die Steuerund Auswertungseinheit 26 kann mehrere Bausteine aufweisen, wie ein FPGA (Field Programmable Gate Array), einen Mikroprozessor (CPU) und dergleichen. Insbesondere für noch zu beschreibende Auswertungsschritte mit einem Verfahren des maschinellen Lernens, insbesondere mit einem neuronalen Netz, können spezialisierte Hardwarebausteine eingesetzt sein, etwa ein KI-Prozessor, eine NPU (Neural Processing Unit), eine GPU (Graphics Processing Unit) oder dergleichen.

Figur 2 zeigt einen beispielhaften Grauwertverlauf längs einer Linie durch einen Barcode. Als Teilschritt des Codelesens soll der Grauwertverlauf binarisiert werden, um aus dem resultierenden Schwarzweißverlauf die Abstände zwischen den Hell-Dunkel-Übergängen beziehungsweise Dunkel-Hell-Übergängen und damit den Codeinhalt zu bestimmen. Die meisten Balken und Lücken, also die dunklen und hellen Bereiche des Barcodes, sind als ausgeprägte Minima und Maxima der Grauwerte zu erkennen. Daneben gibt es Sattel, Doppelpeaks und weniger ausgeprägte Extrema, in denen schon mit bloßem Auge nicht so eindeutig entscheidbar ist, ob dies ein Übergang zwischen Balken und Lücke oder nur eine Störung oder Ungenauigkeit der Grauwerterfassung ist. An diesen Stellen kann es selbst noch mit lokal angepassten Schwellen zu Fehlern der Binarisierung und in deren Folge zu einem falsch oder nicht gelesenen Barcode kommen.

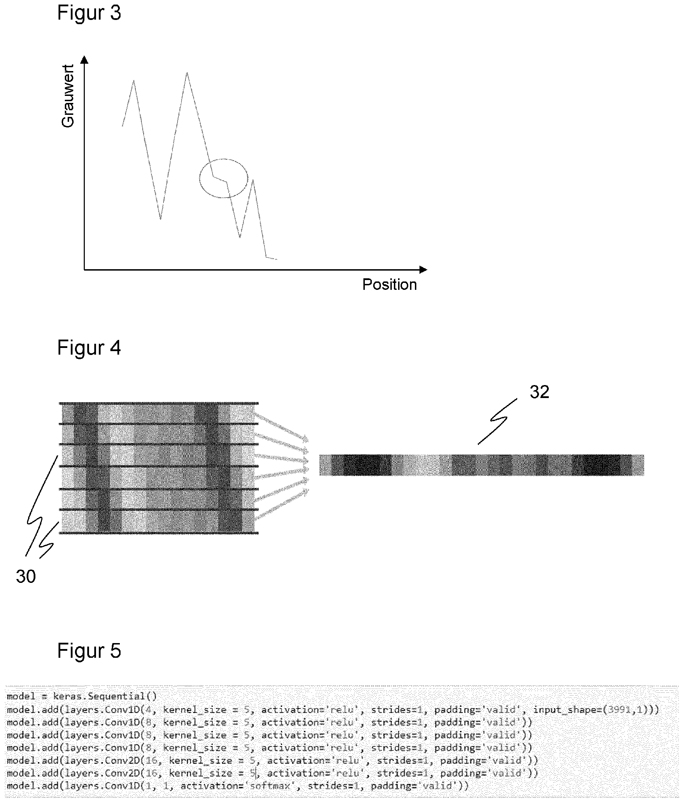

Figur 3 zeigt einen Ausschnitt eines Grauwertverlaufs wie in Figur 2. An der eingekreisten Stelle äußert sich eine dünne Lücke des Barcodes nicht als Maximum und nicht einmal als Sattelpunkt, sondern lediglich als Steigungsbegrenzung. Die Motivation der Erfindung lässt sich damit zusammenfassen, dass durch Aufbereitung der Grauwertverläufe eine Ausgangssituation geschaffen werden soll, bei der eine Binarisierung auch an derartigen Problemstellen zu dem richtigen Ergebnis kommt.

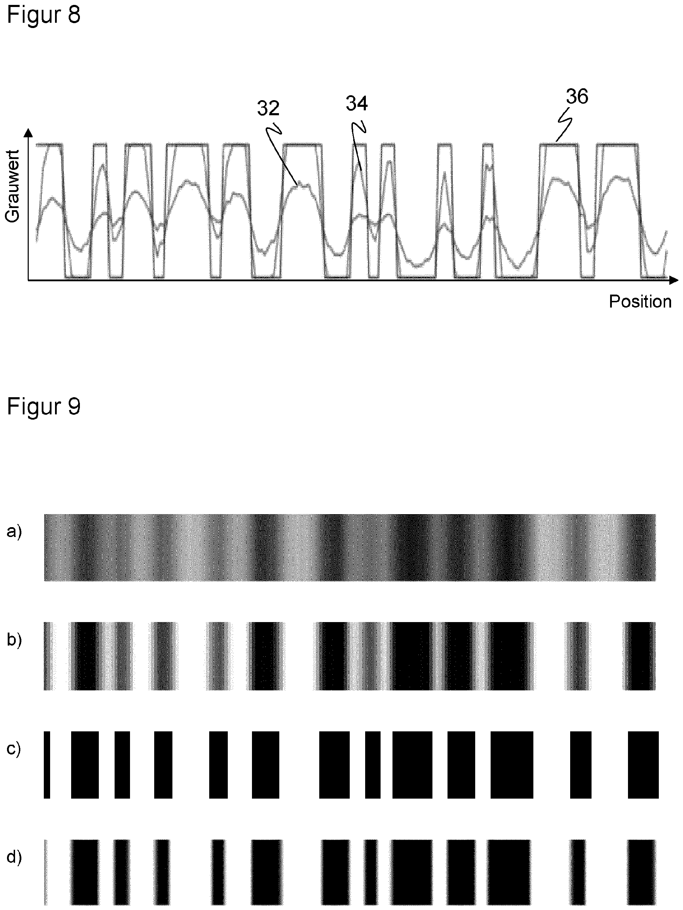

Das Grundprinzip der Erfindung liegt also darin, den ursprünglichen Grauwertverlauf nicht sofort einem Binarisierungsalgorithmus zu unterwerfen, sondern zuvor ein nicht-lineares Filter anzuwenden, das den Grauwertverlauf hinsichtlich der späteren Binarisierung verbessert. Ein solches nicht-lineares Filter kann gerade bei gering aufgelösten und gleichzeitig unscharfen Grauwertverläufen wie im Beispiel der Figur 3 Informationen für die Binarisierung herausarbeiten, die mit herkömmlichen Verfahren nicht zugänglich sind. In einer später unter Bezugnahme auf die Figuren 5 bis 7 näher erläuterten Ausführungsform kann dieses Filter durch ein Verfahren des maschinellen Lernens, insbesondere ein neuronales Netz (datengetriebener Ansatz) implementiert sein, das trainiert wurde, um die Qualität schlecht lesbarer Grauwertverläufe zu verbessern. Alternativ kann in einer unter Bezugnahme auf die Figuren 8 und 9 näher erläuterten Ausführungsform ein klassisches Verfahren verwendet werden. Das Filter erzeugt jeweils aus ursprünglichen Grauwertverläufen einen aufgeschärften Grauwertverlauf, es liegen also eingangsseitig wie ausgangsseitig noch Grauwerte beispielsweise mit acht Bit Farboder Grauwerttiefe vor. Anschließend wird die Farbtiefe mit einem vergleichsweise einfachen Binarisierungsalgorithmus auf ein Bit reduziert. Hier kann praktisch jeder an sich bekannte Binarisierungsalgorithmus verwendet werden, etwa ein herkömmlicher differentieller oder Schwellwert-Algorithmus. Prinzipiell ist es denkbar, für die Binarisierung ebenfalls ein Verfahren des maschinellen Lernens zu nutzen, insbesondere auch dasselbe Verfahren des maschinellen Lernens des Filters, so dass direkt aus den ursprünglichen Grauwertverläufen als Eingangsdaten ein Schwarzweißverlauf als Ausgangsdaten entsteht.

Figur 4 illustriert einen zusätzlichen Vorbereitungsschritt, bei dem mehrere ursprüngliche Grauwertverläufe 30 zunächst zu einem höher aufgelösten Grauwertverlauf 32 verarbeitet werden (Superresolution). Das genannte nicht-lineare Filter zum Aufschärfen erhält vorzugsweise den höher aufgelösten Grauwertverlauf 32 als Eingang. Die mehreren Grauwertverläufe 30 folgen vorzugsweise mehreren Linien durch denselben Barcode, insbesondere indem ein flächiger Bildausschnitt des Barcodes statt einer einzelnen Zeile verarbeitet wird. Der flächige Bildausschnitt muss nicht direkt der Aufnahme des Barcodes entnommen werden, beispielsweise können Grauwertverläufe 30 in vertikaler Richtung aus größeren Abständen näher zusammengerückt oder in horizontaler Richtung zueinander ausgerichtet werden. Ob die Eingangsdaten als flächiger Bildausschnitt oder als mehrere Zeilen bezeichnet werden, ist für das Verfahren nicht weiter von Belang. Es ist von Vorteil, wenn die Linien entlang Bildzeilen oder Bildspalten liegen. Dann ist zwar die für das Lesen optimale Orientierung senkrecht zu den Balken des Barcodes in der Regel nur näherungsweise durch Wahl entweder der Bildzeilen oder der Bildspalten erreichbar. Bei auch denkbaren schrägen Linien durch das Bild eines Barcodes können jedoch störende Diskretisierungsartefakte auftreten. In der Darstellung der Figur 4 wurden die mehreren ursprünglichen Grauwertverläufe 30 schon in einer passenden Richtung quer zum Barcode orientiert. Dieser Vorbereitungsschritt kann ausgelassen werden, das nicht-lineare Filter muss dann aber zusätzlich noch mit dem Rotationsfreiheitsgrad zurechtkommen, was insbesondere beim Einsatz eines Verfahrens des maschinellen Lernens einer erheblich größeren Anzahl von Trainingsbeispielen bedarf.

Die Auflösungserhöhung ist deshalb von Vorteil, weil die Erfindung vorrangig für mit niedriger Auslösung erfasste Barcodes gedacht ist, d.h. kleine Modulgrößen im Bereich von einem Pixel pro Modul oder darunter. Mit größeren Modulgrößen kommen in aller Regel bereits herkömmliche Binarisierungen ohne besondere Vorverarbeitung zurecht, obwohl die Erfindung natürlich auch für solche Barcodes anwendbar bleibt. Indem mehrere ursprüngliche Grauwertverläufe 30 einbezogen werden, wird die Informationsredundanz von Barcodes vorteilhaft ausgenutzt, die ohnehin bei üblichen Codeleseanwendungen räumlich und/oder zeitlich mehrfach erfasst wird. Alternativ wäre auch denkbar, nur einen einzigen Grauwertverlauf als Eingang zu verwenden, dessen Auflösung durch Interpolation ebenfalls erhöht werden kann. Im Gegensatz zu dem in Figur 4 illustrierten Vorgehen mit mehreren Grauwertverläufen 30 als Eingang verbreitert aber eine Interpolation die Informationsbasis nicht.

Der höher aufgelöste Grauwertverlauf 32 ist der Ausgangspunkt für eine nun zu beschreibende sich anschließende Schärfung, in der Übergänge zwischen Balken und Lücken aufgeschärft und die Grauwerte von Balken und Lücken dunkler beziehungsweise heller werden. Das angestrebte Ergebnis kommt einem binären Hell-Dunkel-Verlauf mit sehr steilen Kanten, jedoch noch in Grauwerten ausgedrückt, möglichst nahe. Dabei muss der höher aufgelöste Grauwertverlauf 32 nicht unbedingt als explizites Zwischenergebnis erzeugt werden. Insbesondere beim Einsatz von Verfahren des maschinellen Lernens kann die Auflösungserhöhung und das Schärfen in einem Schritt erfolgen. Die Auflösungserhöhung ist dann aber impliziter Teil dieses Verfahrens. Ganz ähnlich kann statt eines gesonderten Schritts die Binarisierung in das Verfahren des maschinellen Lernens einbezogen werden. Hier ist jeweils abzuwägen zwischen dem Training mehrerer für sich einfacherer Teilschritte oder eines gemeinsamen, dafür komplexeren Schrittes. Da für einige Teilschritte, wie die Binarisierung, sehr einfache bekannte klassische Verfahren zur Verfügung stehen, ist der Ansatz mit einem monolithischen, hochkomplexen neuronalen Netz für sämtliche Teilschritte nicht unbedingt von Vorteil.

Im Folgenden wird nun das nicht-lineare Filter zum Aufschärfen des höher aufgelösten Grauwertverlaufs 32 in zwei Ausführungsformen näher erläutert. Die erste Ausführungsform basiert auf einem Verfahren des maschinellen Lernens, hier am Beispiel eines neuronalen Netzes, und wird in den Figuren 5 bis 7 illustriert. Die zweite Ausführungsform basiert auf einem klassischen Verfahren, hier am Beispiel einer Richardson-Lucy-Deconvolution, und wird in den Figuren 8 und 9 illustriert.

Figur 5 zeigt einen Ausschnitt eines Programmcodes (Codesnippet) zur Erzeugung eines beispielhaften neuronalen Netzes, das als nicht-lineares Filter zur Schärfung eines Grauwertverlaufs eingesetzt werden kann. Vorzugsweise wird am Eingang ein höher aufgelöster Grauwertverlauf 32 mit beispielhaft 3991 aufeinanderfolgenden Grauwerten eingespeist. Für die alternative direkte Verarbeitung von mehreren ursprünglichen Grauwertverläufen 30 wird die Architektur vorzugsweise angepasst, beispielsweise um eher mehrere kürzere Zeilen statt einer langen Zeile einzuspeisen und auch in der Architektur dem ersten Teilziel einer einzigen höher aufgelösten Zeile entgegenzukommen.

Das beispielhafte neuronale Netz ist ein Faltungsnetz (CNN, Convolutional Neural Network) mit mehreren versteckten Schichten. Die Kernelgröße ist hierzu N=5 gewählt. Das passt zu einer Modulgröße fünf, bei dieser Modulgröße erfasst ein Kernel jeweils in etwa ein Modul. Diese beispielhafte Modulgröße entsteht, wenn ein ursprünglich mit Modulgröße <1,5 aufgenommener Barcode zunächst durch Auflösungserhöhung auf eine fünffache Auflösung beziehungsweise Modulgröße gebracht wird. Mit anderen Worten entspricht dann der Kernel einem realen Pixel des ursprünglichen niedrig aufgelösten Bildes des Barcodes. Der Kernel kann abweichend ein wenig breiter oder schmaler sein. Wahlweise können 1D-Faltungsschichten mit einer Kernelgröße N oder 2D-Faltungsschichten mit einer Kernelgröße Nx1 verwendet werden. Das Beispielnetz der Figur 1 nutzt in den frühen Schichten 1D-Faltungsschichten und in späteren Schichten 2D-Faltungsschichten. Die Architektur kann in ihrer Tiefe und Breite variiert werden, maßgeblich ist, dass nach dem Training aufgeschärfte Grauwertverläufe erzeugt werden, mit denen der Codeinhalt gelesen werden kann.

Das beispielhafte Faltungsnetz arbeitet mit Schrittweite eins (strides=1), da vorzugsweise der aufgeschärfte Grauwertverlauf am Ausgang die gleiche Größe haben soll wie der eingehende Grauwertverlauf. Valides Padding und die Aktivierungsfunktion ReLu haben sich in den Testläufen bewährt, hier sind Variationen vorstellbar.

Für das überwachte Training (supervised learning) des Faltungsnetzes sind Beispiele mit Grauwertverläufen und jeweiligem dazu passenden Schwarzweißverlauf als Label oder Ground Truth erforderlich. Während des Trainings werden die Grauwertverläufe eingangsseitig präsentiert, und das neuronale Netz lernt aus dem Fehler zwischen der ausgangsseitigen Vorhersage beziehungsweise deren Binarisierung und dem jeweils richtigen Schwarzweißverlauf des Trainingsdatensatzes durch entsprechende Anpassung der Gewichte. Der zu lernende Schwarzweißverlauf ist vorzugsweise ideal, wechselt also entsprechend dem Codeinhalt auf einer Kante über jeweils nur eine Position von maximal hell auf maximal dunkel und umgekehrt. Diese strenge Anforderung muss nicht unbedingt erfüllt sein, solange es ein Schwarzweißverlauf ist, der in einem geeigneten Decoder zu einem Leseerfolgt führt. Übrigens wird hier von einem Schwarzweißverlauf gesprochen, d.h. einem Verlauf mit nur einem Bit Farbtiefe. Für das Training gleichwertig ist ein Grauwertverlauf, der nur die extremen Grauwerte beispielsweise bei 0 und 255 oder einem anderen sehr niedrigen und hohen Grauwert annimmt. Hierzwischen wird nicht mehr eigens unterschieden.

Für eine anwendungsbezogene Leistungsfähigkeit ist es von Vorteil, wenn dem Training reale Beispielbilder zugrunde liegen. Auf diese Weise wird das Faltungsnetz bestmöglich auf in der Praxis vorkommende Effekte und vor allem Kombinationen dieser Effekte trainiert. Vorzugsweise werden dafür Barcodes mit größeren Modulbreiten aufgenommen, damit gewährleistet ist, dass der Codeinhalt gelesen werden kann und somit ein richtiger Schwarzweißverlauf vorliegt beziehungsweise aus dem Codeinhalt rekonstruiert werden kann. Die Grauwertverläufe werden herunterskaliert (Downsampling), um künstlich und nachträglich die Situation eines aufgenommenen Barcodes mit kleiner Modulgröße von beispielsweise 0,75 Pixel pro Modul herbeizuführen. Die Auflösung der zugehörigen Schwarzweißverläufe wird entsprechend reduziert.

Um Diskretisierungs- oder Abtastartefakte bei der Auflösungsreduzierung zu verringern, ist es vorteilhaft, zunächst ein von der Zielauflösung abhängiges Vorfilter anzuwenden und dann das gefilterte Signal in der Zielauflösung abzutasten. Bei ganzzahligem Skalierungsfaktor genügt alternativ eine einfache Mittelwertbildung. Eine weitere Möglichkeit ist eine gewichtete Mittelung, beispielsweise (0.5*x1+x2+x3+x4+0.5*x5) für eine jeweilige Nachbarschaft x1...x5 von Pixeln bei einer Schrittweite von drei Pixeln und einem Skalierungsfaktor drei. Diese Operation erzeugt eine stärkere Unschärfe, was für das Training gewünscht sein kann, das ja gerade solche kritischen Situationen abdecken soll.

Stattdessen oder um die Menge an Trainingsdaten zu erhöhen, besteht auch die Möglichkeit, künstlich erzeugte Grauwertverläufe und dazu passende Schwarzweißverläufe zu verwenden. Solche Verläufe lassen sich aus dem Codeinhalt erzeugen, wobei zumindest auf die Grauwertverläufe diverse Verfremdungsfilter angewandt werden sollten, um realen Bildaufnahmen zumindest näher zu kommen. Solche Verfremdungsfilter sind im Übrigen auch geeignet, aus bestehenden Trainingsdatensätzen zusätzliche Trainingsdatensätze abzuleiten.

Da das Faltungsnetz somit auf eine bestimmte Modulgröße trainiert ist, kann es sinnvoll sein, vor den Inferenzen im Betrieb die eingespeisten Grauwertverläufe auf diese trainierte Modulgröße zu reskalieren. Gerade im Falle nicht-ganzzahliger Reskalierungen ist aber sorgfältig abzuwägen, ob nicht gerade durch die Reskalierung Artefakte eingeführt werden, die einen Vorteil der passenden Modulgröße zunichtemachen.

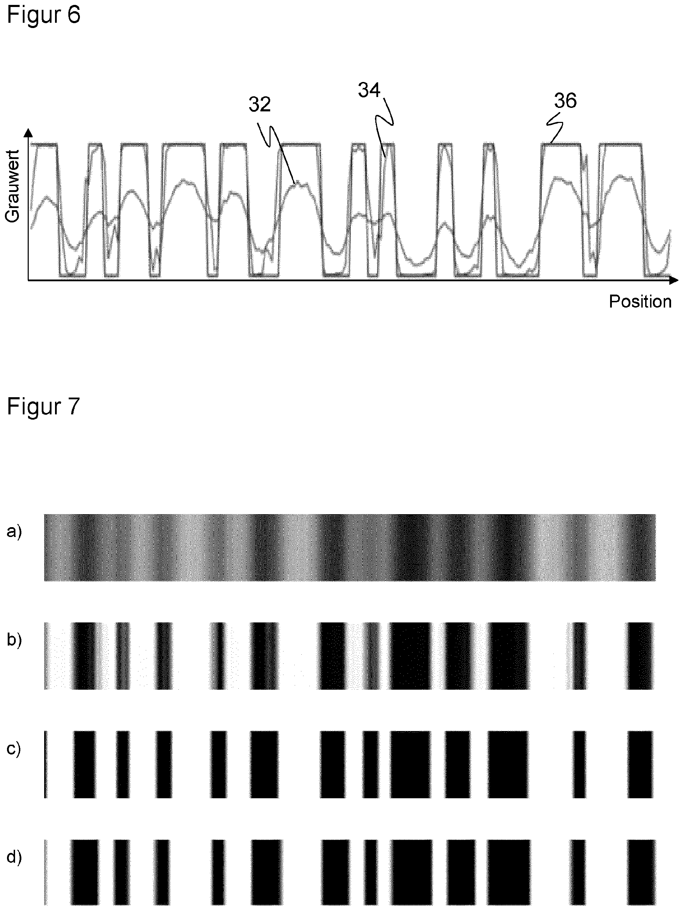

Figur 6 zeigt ein beispielhaftes Ergebnis einer Anwendung des trainierten Faltungsnetzes. Das Eingangssignal ist der höher aufgelöste Grauwertverlauf 32. Wie schon zu den Figuren 2 und 3 erläutert, sind nicht alle Extrema und Kanten klar zu erkennen, und der verfügbare Grauwertebereich wird praktisch nirgends ausgeschöpft. Der aufgeschärfte Grauwertverlauf 34, den das Faltungsnetz erzeugt, variiert hingegen mit sehr steilen Kanten zwischen minimaler und maximaler Helligkeit. Über weite Strecken ist der aufgeschärfte Grauwertverlauf 34 identisch mit dem idealen Schwarzweißverlauf 36 (Ground Truth). An den Kanten und in manchen Extrema ist noch eine Abweichung nachzuvollziehen. Erkennbar kann eine einfache Schwelle bei einem mittleren Grauwert gesetzt werden, mit der eine Binarisierung dem idealen Schwarzweißverlauf 36 zumindest sehr nahekommt. Das Kriterium ist hier ohnehin nicht Perfektion, sondern das Schaffen der Voraussetzung für ein erfolgreiches Codelesen.

Die Figuren 7 a-d zeigen das Ergebnis in einer alternativen Darstellung. In Figur 7a ist der höher aufgelöste Grauwertverlauf 32 nun vervielfältigt übereinander wie ein Bildausschnitt dargestellt. Das Bild ist verwaschen und kontrastarm. Figur 7b zeigt eine entsprechende Darstellung der aufgeschärften Grauwertverläufe 34. Nur noch an einigen Übergängen finden sich überhaupt Grauwerte, die nicht weiß oder schwarz sind. Figur 7c zeigt ein entsprechendes Binarisierungsergebnis, das diese Grauwerte nun eliminiert, indem sie weiß oder schwarz zugeordnet sind. Figur 7d ist eine entsprechende Darstellung des idealen Schwarzweißverlaufs 36. Vergleicht man Figur 7c und 7d, so sind noch einige etwas zu schmale Balken übriggeblieben. Damit kommt aber ein Decoder zurecht, ohnehin solange solche Breitenunterschiede von Balken und Lücken klar unterhalb der Modulgröße bleiben, aber auch sonst durch Mehrfachversuche, Fehlerkorrekturen und dergleichen.

In einer weiteren Ausführungsform kann das nicht-lineare Filter alternativ zu einem Verfahren des maschinellen Lernens als klassisches Verfahren implementiert werden. Das wird hier am Beispiel der Richardson-Lucy-Deconvolution erläutert, einem iterativen Algorithmus mit dem Ziel, eine bei der Aufnahme entstandene Unschärfe aus einem Signal zu entfernen (Deblurring). Dabei wird eine Punktspreizfunktion zu Grunde gelegt und angenommen, dass die Unschärfe im optischen System durch eine Faltung mit dieser Punktspreizfunktion entstanden ist. Entsprechend kann dann durch Entfaltung (Deconvolution) die Unschärfe beseitigt werden.

Vorzugsweise wird zunächst geschätzt, ob der eingangsseitige höher aufgelöste Grauwertverlauf 32 überhaupt Unschärfe aufweist, Ist das der Fall, wird eine vorzugsweise zuvor festgelegte Anzahl von Richardson-Lucy-Iterationen ausgeführt, und danach liegt dann der aufgeschärfte Grauwertverlauf 34 vor. Als Punktspreizfunktion wird beispielsweise die Gaußsche Unschärfefunktion angenommen. Die Breite der Unschärfefunktion kann abhängig von der zuvor geschätzten Unschärfe gewählt werden. Die Anzahl der Iterationen ist eine Abwägung zwischen verfügbarer Rechenzeit, gewünschter Schärfung und möglichen Artefakten durch Überkorrektur. Die genannte der Punktspreizfunktion hat sich empirisch bewährt. Anzahl und geeignete Punktspreizfunktion können variiert und anhand der Ergebnisse gewählt werden.

Figur 8 ist ebenso aufgebaut wie Figur 6 und zeigt ein Vergleichsergebnis von höher aufgelöstem Grauwertverlauf, nun mittels klassischen Verfahrens statt Verfahrens des maschinellen Lernens aufgeschärftem Grauwertverlauf 34, konkret im Beispiel Richardson-Lucy-Deconvolution statt Faltungsnetz, und idealem Schwarzweißverlauf 36. Auch in dieser Ausführungsform ergibt sich eine deutliche Verbesserung durch das nicht-lineare Filter, wenn auch das Faltungsnetz sich in den gezeigten Beispielen als etwas leistungsfähiger erweist. Nach einer Binarisierung bleiben jedoch keine relevanten Einbrüche.

Die Figuren 9a-d zeigen das Ergebnis nochmals analog den Figuren 7a-d, mit den höher aufgelösten Grauwertverläufen 32 in Figur 9a, den mittels Richardson-Lucy-Deconvolution aufgeschärften Grauwertverläufen 34 in Figur 9b, dem zugehörigen Binarisierungsergebnis in Figur 9c und den idealen Schwarzweißverläufen 36 in Figur 9d.

Die beiden unter Bezugnahme auf die Figuren 5 bis 9 konkreter erläuterten Ausführungsformen basieren auf dem höher aufgelösten Grauwertverlauf 32 als Eingangsgröße. Es wurde schon erwähnt, dass die beiden Schritte Auflösungserhöhung und Schärfung auch gemeinsam erfolgen können. Insbesondere wird dabei ein Faltungsnetz trainiert, das als zweidimensionale Eingangsgröße ein Bild entsprechend Figur 4 links mit mehreren ursprünglichen Grauwertverläufen 30 erhält, die optional noch in Zeilenrichtung zueinander ausgerichtet werden und dann durch 2D-Faltungen, unter Auslassung einer expliziten Ausgabe eines höher aufgelösten Grauwertverlaufs 32, den aufgeschärften Grauwertverlauf 34 liefert. Optional kann das Faltungsnetz auch gleich noch die Binarisierung lernen, wobei dieser Schritt dank der Aufbereitung sehr einfach wird und daher eine klassische Behandlung vorteilhafter sein kann.

## Patentansprüche

1. Verfahren zum Lesen eines eindimensionalen optischen Codes (20), bei dem Bilddaten mit dem Code (20) aufgenommen und aus den Bilddaten mehrere Grauwertverläufe (30) durch den Code gewonnen werden, aus den Grauwertverläufen (30) mittels Binarisierung ein Schwarzweißverlauf gebildet und aus dem Schwarzweißverlauf der Codeinhalt des Codes (20) gelesen wird,
**dadurch gekennzeichnet,**
**dass** aus den mehreren Grauwertverläufen (30) zur Vorbereitung der Binarisierung zunächst ein aufgeschärfter Grauwertverlauf (34) mit einer gegenüber den ursprünglichen Bilddaten erhöhten Auflösung, schärferen Kanten und ausgeprägteren Extrema erzeugt wird und dass der aufgeschärfte Grauwertverlauf (34) binarisiert wird, um den Schwarzweißverlauf zu bilden.

2. Verfahren nach Anspruch 1,
wobei in einer Vorverarbeitung die Bilddaten segmentiert werden, um einen Bildbereich mit dem Code (20) zu finden.

3. Verfahren nach Anspruch 1 oder 2,
wobei in einer Vorverarbeitung eine Orientierung des Codes (20) in den Bilddaten bestimmt wird.

4. Verfahren nach einem der vorhergehenden Ansprüche,
wobei zur Vorbereitung der Binarisierung zunächst aus den mehreren Grauwertverläufen (30) ein höher aufgelöster Grauwertverlauf (32) erzeugt wird.

5. Verfahren nach Anspruch 4,
wobei aus dem höher aufgelösten Grauwertverlauf (32) durch ein Entfaltungsverfahren, insbesondere ein Richardson-Lucy-Verfahren, der aufgeschärfte Grauwertverlauf (34) erzeugt wird.

6. Verfahren nach Anspruch 4,
wobei aus dem höher aufgelösten Grauwertverlauf (32) durch ein Verfahren des maschinellen Lernens der aufgeschärfte Grauwertverlauf (34) erzeugt wird.

7. Verfahren nach Anspruch 6,
wobei das Verfahren des maschinellen Lernens ein neuronales Netz aufweist, insbesondere ein Faltungsnetz mit einem Filterkern einer Breite entsprechend einer Modulgröße des Codes (20) in dem höher aufgelösten Grauwertverlauf (32).

8. Verfahren nach einem der Ansprüche 1 bis 4,
wobei aus den mehreren Grauwertverläufen (30) durch ein Verfahren des maschinellen Lernens, insbesondere ein Faltungsnetz, ein höher aufgelöster Grauwertverlauf (32) oder der aufgeschärfte Grauwertverlauf (34) erzeugt wird.

9. Verfahren nach einem der Ansprüche 6 bis 8,
wobei das Verfahren des maschinellen Lernens mittels überwachten Lernens anhand von Trainingsdaten trainiert wird, die einen Grauwertverlauf (30, 32, 34) und einen Schwarzweißverlauf (36) einander zuordnen, und wobei die Trainingsdaten aus einem vorgegebenen Codeinhalt oder einem erfolgreich gelesenen Code (20) gewonnen sind.

10. Verfahren nach Anspruch 9,
wobei die Auflösung der Trainingsdaten reduziert wird, um Trainingsdaten mit einer kleinen Modulgröße zu gewinnen.

11. Verfahren nach einem der vorhergehenden Ansprüche,
wobei die Bilddaten in Relativbewegung eines Lichtempfangselements (24) und eines codetragenden Objekts (14) aufgenommen werden, insbesondere zeilenweise.

12. Codelesevorrichtung (10) zum Lesen eines eindimensionalen optischen Codes (20) mit mindestens einem Lichtempfangselement (24) zur Aufnahme von Bilddaten mit dem Code (20) und mit einer Steuer- und Auswertungseinheit (26),
die für die Durchführung eines Verfahrens nach einem der vorhergehenden Ansprüche ausgebildet ist.

## Claims

1. A method for reading a one-dimensional optical code (20), wherein image data including the code (20) are recorded and a plurality of grayscale profiles (30) through the code (20) are obtained from the image data, a black-and-white profile is formed from the grayscale profiles (30) by means of binarization, and the code content of the code (20) is read from the black-and-white profile,
**characterized in that**, in preparation for binarization, first a sharpened grayscale profile (34) having an increased resolution, sharper edges and more pronounced extremes compared with the original image data is generated from the plurality of grayscale profiles (30), and **in that** the sharpened grayscale profile (34) is binarized in order to form the black-and-white profile.

2. The method according to claim 1,
wherein the image data is segmented in a preprocessing step to find an image area including the code (20).

3. The method according to claim 1 or 2,
wherein an orientation of the code (20) in the image data is determined in a preprocessing step.

4. The method according to any of the preceding claims,
wherein, for preparing the binarization, a higher-resolution grayscale profile (32) is first generated from the plurality of grayscale profiles (30).

5. The method according to claim 4,
wherein the sharpened grayscale profile (34) is generated from the higher-resolution grayscale profile (32) by a deconvolution method, in particular a Richardson-Lucy method.

6. The method according to claim 4,
wherein the sharpened grayscale profile (34) is generated from the higher-resolution grayscale profile (32) by a method of machine learning.

7. The method according to claim 6,
wherein the machine learning method comprises a neural network, in particular a convolutional network having a filter kernel of a width corresponding to a module size of the code (20) in the higher-resolution grayscale profile (32).

8. The method according to any of claims 1 to 4,
wherein a higher-resolution grayscale profile (32) or the sharpened grayscale profile (34) is generated from the plurality of grayscale profiles (30) by a machine learning method, in particular a convolutional network.

9. The method according to any of claims 6 to 8,
wherein the machine learning method is trained by means of supervised learning using training data that assigns a grayscale profile (30, 32, 34) and a black-and-white profile (36) to each other, and wherein the training data is obtained from a predetermined code content or a successfully read code (20).

10. The method according to claim 9,
wherein the resolution of the training data is reduced to obtain training data with a small module size.

11. The method according to any of the preceding claims,
wherein the image data is recorded in relative motion of a light-receiving element (24) and a code-bearing object (14), in particular line by line.

12. A code-reading device (10) for reading a one-dimensional optical code (20) having at least one light receiving element (24) for receiving image data including the code (20) and having a control and evaluation unit (26) configured for carrying out a method according to any of the preceding claims.

## Revendications

1. Procédé de lecture d'un code optique unidimensionnel (20), consistant à enregistrer des données d'image avec le code (20) et à obtenir une pluralité de profils de niveaux de gris (30) par le code à partir des données d'image, à former un profil de noir et blanc à partir des profils de niveaux de gris (30) au moyen d'une binarisation, et à lire le contenu du code (20) à partir du profil de noir et blanc,
**caractérisé en ce que**
pour préparer la binarisation, on génère d'abord, à partir de la pluralité de profils de niveaux de gris (30), un profil de niveaux de gris (34) rendu plus net avec une résolution accrue par rapport à celle des données d'image initiales, avec des bords plus nets et avec des extrêmes plus marqués, et
**en ce que** l'on convertit en binaire le profil de niveaux de gris (34) rendu plus net, afin de former le profil de noir et blanc.

2. Procédé selon la revendication 1,
dans lequel, dans un prétraitement, on segmente les données d'image pour trouver une zone d'image avec le code (20).

3. Procédé selon la revendication 1 ou 2,
dans lequel, dans un prétraitement, on détermine une orientation du code (20) dans les données d'image.

4. Procédé selon l'une des revendications précédentes,
dans lequel, pour préparer la binarisation, on génère d'abord, à partir de la pluralité de profils de niveaux de gris (30), un profil de niveaux de gris (32) à résolution plus élevée.

5. Procédé selon la revendication 4,
dans lequel, à partir du profil de niveaux de gris (32) à résolution plus élevée, on génère le profil de niveaux de gris rendu plus net (34) par un procédé de déconvolution, en particulier un procédé Richardson-Lucy.

6. Procédé selon la revendication 4,
dans lequel, à partir du profil de niveaux de gris (32) à résolution plus élevée, on génère le profil de niveaux de gris rendu plus net (34) par un procédé d'apprentissage automatique.

7. Procédé selon la revendication 6,
dans lequel le procédé d'apprentissage automatique comprend un réseau neuronal, en particulier un réseau convolutif avec un noyau de filtrage d'une largeur correspondant à une taille de module du code (20) dans le profil de niveaux de gris (32) à résolution plus élevée.

8. Procédé selon l'une des revendications 1 à 4,
dans lequel, à partir de la pluralité de profils de niveaux de gris (30), on génère un profil de niveaux de gris (32) à résolution plus élevée ou le profil de niveaux de gris rendu plus net (34) par un procédé d'apprentissage automatique, en particulier par un réseau de convolution.

9. Procédé selon l'une des revendications 6 à 8,
dans lequel le procédé d'apprentissage automatique est entraîné au moyen d'un apprentissage supervisé à l'aide de données d'entraînement qui associent un profil de niveaux de gris (30, 32, 34) et un profil de noir et blanc (36) l'un à l'autre, et les données d'entraînement sont obtenues à partir d'un contenu de code prédéfini ou d'un code (20) lu avec succès.

10. Procédé selon la revendication 9,
dans lequel la résolution des données d'entraînement est réduite afin d'obtenir des données d'entraînement avec une petite taille de module.

11. Procédé selon l'une des revendications précédentes,
dans lequel les données d'image sont enregistrées, en particulier ligne par ligne, pendant un mouvement relatif d'un élément de réception de lumière (24) et d'un objet porteur de code (14).

12. Dispositif de lecture de code (10) pour lire un code optique unidimensionnel (20), comprenant au moins un élément de réception de lumière (24) pour enregistrer des données d'image avec le code (20), et une unité de commande et d'évaluation (26), qui est conçu pour la mise en oeuvre d'un procédé selon l'une des revendications précédentes.
